# FASCICULE DE BREVET EUROPEEN

(11) **EP 4 696 464 B1**
(45) Date de publication et mention de la délivrance du brevet: **02.12.2026**
(21) Numéro de dépôt: 25190507.1
(22) Date de dépôt: 18.07.2025
(51) Int. Cl.: B25J 11/00, B05B 13/02, B25J 15/00

(54) **OUTIL DESTINE A EQUIPER UNE EXTREMITE D'UN BRAS POLY-ARTICULE D'UN ROBOT**
WERKZEUG ZUM ANBRINGEN EINES ENDES EINES MEHRKÖPFES EINES ROBOTERS
TOOL FOR FITTING AN END OF A POLY-ARTICULATED ARM OF A ROBOT

(30) Priorité: 13.08.2024 FR 2408871
(43) Date de publication de la demande: 18.02.2026
(73) Titulaire: Stellantis Auto SAS, 78300 Poissy (FR)
(72) Inventeur: GONZALEZ, Jaime, 36212 Vigo (ES); LLUCH FERNADEZ, Marcos, 36210 Vigo (ES)
(74) Mandataire: BCIP

(56) Documents cités:
- US-A1- 2021 354 312
- US-B1- 6 398 871
- US-B2- 11 285 623
- US-B2- 8 329 259

## Description

Le contexte technique de la présente invention est celui des équipements de chaînes de montage de véhicules automobiles. Plus particulièrement, l'invention a trait à un outil destiné à équiper une extrémité d'un bras poly-articulé d'un robot.

Certains robots sont utilisés sur des chaînes de montage de véhicules automobiles afin d'intervenir sur les portes arrière de ces derniers qui sont montées de manière rotative, contrôlant l'accès à un coffre arrière. On notera que ces portes arrière sont installées sur les extrémités arrière des véhicules et peuvent, par exemple, être des hayons.

De tels robots sont par exemple utilisés dans des cabines de peinture pour ouvrir la porte arrière afin que de la peinture puisse être pulvérisée à l'intérieur de la structure.

Le document US 6 398 871 B1 décrit un outil de robot pour ouvrir un couvercle de coffre comprenant un manchon en matériau tendre tel que l'uréthane pour amortir le contact. Le document US 2021/354312 A1 propose un outil similaire utilisant un manchon en acide polylactique. Le document US 8 329 259 B2 décrit quant à lui un outil doté d'un revêtement protecteur en Téflon. Cependant, aucun de ces documents ne divulgue un manchon cylindrique coiffant un arbre intérieur métallique tout en étant libre en rotation par rapport à celui-ci afin d'éliminer les frottements glissants.

Afin de réaliser chaque ouverture d'une porte arrière, un robot comprend au moins un bras poly-articulé comportant une extrémité à laquelle est solidarisé fixement un premier outil. Ce dernier se présente généralement sous la forme d'une tige sur laquelle sont solidarisés deux disques distants, de diamètres différents et destinés à venir se coupler à un second outil préalablement solidarisé fixement - par exemple par vissage - à une partie prédéfinie de la porte arrière, généralement située au voisinage de son extrémité inférieure lorsqu'il s'agit d'un hayon arrière à ouverture par rotation vers le haut.

Ce second outil se présente généralement sous la forme d'une tige sur laquelle est solidarisé un cadre rectangulaire auquel doit se coupler le premier outil grâce à une première trajectoire prédéfinie du bras articulé. Une fois le couplage réussi, le bras articulé est actionné afin de faire suivre au premier outil une seconde trajectoire prédéfinie destinée à provoquer l'ouverture de la porte arrière. Ensuite, une fois la porte arrière placée dans une position ouverte prédéfinie, le bras articulé est de nouveau actionné afin de découpler le premier outil du second outil, et par exemple une pulvérisation de peinture peut débuter, au moins à l'intérieur de l'espace interne du véhicule.

Cette façon de procéder pour obtenir l'ouverture de la porte arrière d'un véhicule présente plusieurs inconvénients.

En effet, elle nécessite le vissage préalable du second outil sur la porte arrière de chaque véhicule, généralement dans l'atelier de chaudronnerie de la chaîne d'assemblage, puis le dévissage de ce second outil, par exemple après la fin des opérations de peinture, puis le rapatriement du second outil à son point de départ (l'atelier de chaudronnerie), ce qui s'avère chronophage et fastidieux et donc augmente le coût de fabrication des véhicules.

En outre, lorsque le véhicule fait l'objet d'opérations de peinture, le second outil reçoit de la peinture du fait qu'il demeure vissé sur la porte arrière. Or, l'accumulation de peinture contraint à nettoyer périodiquement le second outil - typiquement tous les vingt cycles - pour que le premier outil puisse continuer à se coupler correctement à lui, ce qui entraîne un surcoût de fabrication des véhicules.

De plus, toujours lorsque le véhicule fait l'objet d'opérations de peinture, le second outil est soumis aux cycles thermiques, ce qui accélère son vieillissement et donc nécessite de le réparer de temps en temps, voire de le remplacer, ce qui entraîne un autre surcoût de fabrication des véhicules.

Par ailleurs, il peut arriver que le cadre du second outil soit mal orienté, et donc empêche son couplage au premier outil, ce qui se traduit par une porte arrière demeurant dans sa position fermée. Il est alors impossible de réaliser les opérations suivantes prévues, et lorsque les robots chargés de réaliser les opérations suivantes prévues heurtent la porte arrière, cela peut engendrer des endommagements de cette porte arrière non ouverte et/ou des robots précités et/ou des hottes aspirantes, ce qui entraîne, notamment, encore d'autres surcoûts de fabrication des véhicules.

Enfin, de tels outils peuvent conduire à des rayures ou des endommagements de la surface de la porte arrière contre laquelle ils sont mis en appui.

Bien entendu, toutes ces situations ne sont pas souhaitées.

La présente invention a pour objet de proposer un nouvel outil pour un robot poly-articulé manipulant des portes arrière de véhicule automobile sur une chaîne de production afin de répondre au moins en grande partie aux problèmes précédents et de conduire en outre à d'autres avantages.

Un autre but de l'invention est de faciliter la mise en œuvre d'un tel outil sur les chaînes de montage automobile.

Un autre but de l'invention est de réduire les risques d'endommagement ou de rayure des portes arrière manipulées par un tel outil.

Un autre but de l'invention est réduire les coûts de production et les durées de fabrication d'un véhicule automobile.

Selon un premier aspect de l'invention, on atteint au moins l'un des objectifs précités avec un outil destiné à équiper une extrémité d'un bras poly-articulé d'un robot configuré pour intervenir sur un véhicule automobile comportant une porte arrière montée rotative et contrôlant l'accès à un coffre arrière. Selon l'invention, l'outil comporte un manchon cylindrique et des moyens de liaison au bras poly-articulé du robot, le manchon cylindrique comportant une surface périphérique extérieure formée d'un matériau tendre afin de ne pas rayer ou endommager la porte arrière du véhicule automobile. Le manchon cylindrique comporte un arbre intérieur configuré pour être fixé solidairement à l'extrémité du bras poly-articulé du robot, le manchon cylindrique coiffant l'arbre intérieur. Le manchon cylindrique est monté rotatif par rapport à l'arbre intérieur ou par rapport à l'extrémité du bras poly-articulé du robot.

Cette configuration permet d'éviter un frottement glissant de l'outil sur la porte arrière. Plus particulièrement, cette configuration permet d'éviter que la surface périphérique extérieure du manchon cylindrique ne soit trainée sur la porte arrière, réduisant ainsi les risques de rayure.

Dans le contexte de la présente invention, la porte arrière est du type d'une porte battante ou d'un hayon. Une porte battante est une porte arrière montée pivotante autour d'une charnière dont l'axe de rotation est vertical et aménagé le long d'un bord latéral du véhicule automobile. A contrario, un hayon est une porte arrière montée pivotante autour d'une charnière dont l'axe de rotation est horizontal et aménagé le long d'un pavillon de toit du véhicule automobile.

Dans le contexte de la présente invention, le robot est du type d'un robot d'intervention sur une chaîne d'assemblage d'un véhicule automobile, et en particulier associé à un poste de peinture du véhicule automobile en cours de d'assemblage. Le robot comporte un bras poly-articulé, c'est-à-dire comportant plusieurs segments reliés entre eux par des liaisons autorisant au moins un degré de liberté l'une par rapport à l'autre, de sorte que le bras poly-articulé est configuré à pouvoir se déplacer et/ou s'orienter selon plusieurs orientations. A titre d'exemple non limitatif, le bras poly-articulé est orientable suivant six degrés de liberté. Bien entendu, le bras articulé est motorisé de sorte à pouvoir être contrôlé à distance et de sorte que ses déplacements, et/ou ses trajectoires et/ou ses rotations et/ou ses orientations soient pilotées par des actionneurs motorisés.

Dans le contexte de la présente invention, l'outil est configuré pour être lié à une extrémité libre du bras poly-articulé, c'est-à-dire au niveau de l'extrémité terminale de la chaîne de segments décrite ci-dessus. L'outil comporte ainsi des moyens de fixation à l'extrémité du bras poly-articulé, ces moyens de fixation pouvant être quelconques.

Dans le contexte de la présente invention, l'outil présente une forme allongée selon un axe d'élongation propre déterminé par une génératrice du manchon cylindrique. Le manchon cylindrique est déterminé par une courbe fermée, de préférence circulaire, éventuellement polygonale, et projetée le long d'une ligne rectiligne qui s'étend de manière sécante par rapport à la courbe fermée, la génératrice. La génératrice s'étend préférentiellement de manière perpendiculaire par rapport à un plan d'extension de la courbe fermée. Dans le contexte de la présente invention, la surface périphérique extérieure du manchon cylindrique est la surface cylindrique. Ainsi, par son élongation le long de l'axe propre, l'outil conforme au premier aspect de l'invention présente des directions adaptée à une mise en appui délicate contre la porte arrière. En effet, la surface périphérique extérieure du manchon cylindrique forme ainsi une surface de contact plus étendue, du fait de l'élongation le long de l'axe d'élongation propre de l'outil selon l'invention, réduisant ainsi la pression exercée sur la porte arrière lorsque ledit outil est mis eu contact de celle-ci.

Dans le contexte de la présente invention, afin de ne pas rayer ou endommager la porte arrière, le manchon cylindrique présente, au moins au niveau de sa surface périphérique extérieure, un matériau tendre qui permet de réaliser un contact doux et amorti contre la porte arrière. Dans le contexte de la présente invention, u matériau tendre s'oppose à un matériau dur. Un matériau dur est par exemple un matériau métallique présentant un module de Young élevé, c'est-à-dire de l'ordre de plusieurs centaines de Gigapascal au moins. A contrario, un matériau tendre est un matériau présentant un moindre module de Young, par exemple de l'ordre de quelques Gigapascal ou moins.

Ainsi, l'invention résout le problème technique en ce qu'il n'est désormais plus nécessaire d'utiliser deux outils pour réaliser l'ouverture de la porte arrière des véhicules, ce qui permet de supprimer plusieurs opérations fastidieuses, de simplifier l'assemblage des véhicules, d'éviter des endommagements de la porte arrière et/ou de robots effectuant des opérations post-ouverture et/ou d'autres appareils impliqués dans ces opérations, et donc de réduire le coût de fabrication des véhicules. En outre, de part la forme allongée de l'outil et la présence d'une interface tendre avec la porte arrière, l'outil conforme au premier aspect de l'invention permet d'éviter d'endommager la porte arrière lors de la mise en œuvre de l'outil et/ou de la rayer lors de l'ouverture ou de la fermeture de la porte arrière par un bras poly-articulé d'un robot équipé d'un tel outil.

L'outil conforme au premier aspect de l'invention comprend avantageusement au moins un des perfectionnements ci-dessous, les caractéristiques techniques formant ces perfectionnements pouvant être prises seules ou en combinaison :
- le matériau tendre formant la surface périphérique est du type d'un matériau présentant un module d'élasticité inférieur à 10 GPa ;
- le matériau tendre formant la surface périphérique est du type d'un polymère technique, tel que par exemple un polyuréthane. En particulier, le matériau en polyuréthane formant la surface périphérique extérieure du manchon cylindrique présente une épaisseur inférieure à 5 mm, préférentiellement comprise entre 1 mm et 3 mm ;
- l'outil selon l'invention comporte des moyens de retenue du manchon cylindrique sur l'arbre intérieur. Par exemple, les moyens de retenue comporte un épaulement aménagé au niveau d'une extrémité axiale du manchon cylindrique et une vis de fixation liant l'épaulement à l'arbre intérieur. Cette configuration avantageuse permet de remplacer facilement le manchon cylindrique sur l'outil conforme au premier aspect de l'invention, par exemple suite à une usure prématurée de la surface cylindrique extérieure ;
- un diamètre extérieur du manchon cylindrique est inférieur à un intervalle mesuré sur le véhicule automobile entre la porte arrière et un panneau arrière du véhicule automobile, mesuré suivant un axe longitudinal et au niveau d'un bord latéral de ladite porte arrière. En d'autres termes, le manchon cylindrique est configuré pour pouvoir être inséré entre le bord latéral de la porte arrière et le panneau arrière du véhicule automobile, afin de pouvoir ouvrir la porte arrière ;

Selon un deuxième aspect de l'invention, il est proposé un robot d'intervention sur un véhicule automobile comportant une porte arrière montée pivotante et contrôlant l'accès à un coffre arrière du véhicule automobile, le robot comprenant au moins un bras poly-articulé dont une extrémité libre est solidaire d'un outil conforme au premier aspect de l'invention ou selon l'un quelconque de ses perfectionnements.

Selon un troisième aspect de l'invention, il est proposé un procédé de manipulation d'une porte arrière de véhicule automobile à l'aide d'un robot conforme au deuxième aspect de l'invention, le procédé de manipulation comportant une étape de mise en appui du manchon cylindrique contre la porte arrière et une étape d'application d'un effort contre la porte arrière par l'outil.

Selon une première variante de réalisation, le procédé de manipulation est du type d'un procédé d'ouverture de la porte arrière du véhicule automobile. Plus particulièrement, l'étape de mise en appui du procédé de manipulation selon l'invention consiste en une étape d'insertion de l'outil entre la porte arrière et un panneau arrière du véhicule automobile et dans lequel l'étape d'application de l'effort est une étape d'ouverture de la porte arrière de sorte à exercer un couple sur la porte arrière conduisant à sa rotation et son ouverture.

Durant l'étape d'insertion, l'outil est inséré dans l'intervalle de sorte que la surface cylindrique soit mise en appui contre la porte arrière. Plus particulièrement, l'outil est inséré dans l'intervalle de manière parallèle ou sensiblement parallèle à l'axe d'élongation du manchon cylindrique, de sorte que la surface périphérique approche la porte arrière de manière tangentielle ou sensiblement tangentielle.

Selon une deuxième variante de réalisation, le procédé de manipulation est du type d'un procédé de fermeture de la porte arrière du véhicule automobile. Plus particulièrement, l'étape de mise en appui du procédé de manipulation selon l'invention consiste en une mise en appui du manchon cylindrique contre la porte arrière et dans lequel l'étape d'application de l'effort est une étape de fermeture de la porte arrière de sorte à exercer un couple sur la porte arrière conduisant à sa rotation et sa fermeture.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue schématique d'un robot équipé d'un outil conforme au premier aspect de l'invention ;
[Fig.2] illustre une vue tridimensionnelle d'un outil conforme au premier aspect de l'invention ;
[Fig.3] illustre une vue en coupe suivant l'axe d'élongation de l'outil illustré sur la FIGURE 2 ;
[Fig.4] illustre une vue schématique de l'utilisation de l'outil selon l'invention pour ouvrir une porte arrière d'un véhicule automobile ;
[Fig.5] illustre un diagramme synoptique du procédé de manipulation conforme au troisième aspect de l'invention.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres et dans la mesure ou ces combinaisons aboutissent à des variantes restant dans le cadre des revendications ci-jointes. On pourra notamment imaginer des variantes de l'invention ne comprenant qu'une sélection de caractéristiques décrites par la suite de manière isolées des autres caractéristiques décrites, si cette sélection aboutit à une variante restant dans le cadre des revendications ci-jointes.

Sur les figures, les éléments communs à plusieurs figures conservent la même référence.

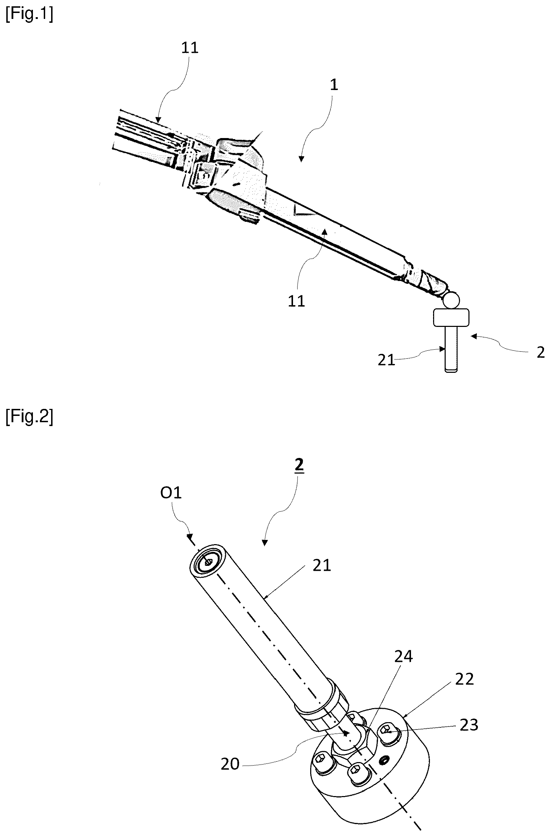

Comme visible sur la FIGURE 1, l'invention adresse un outil 2 destiné à équiper une extrémité d'un bras poly-articulé 1 d'un robot configuré pour intervenir sur un véhicule automobile 3 comportant une porte arrière 31 montée rotative et contrôlant l'accès à un coffre arrière.

Comme visible sur les FIGURES 2 à 4, l'outil 2 comporte un manchon cylindrique 21 et des moyens de liaison au bras poly-articulé 1 du robot, le manchon cylindrique 21 comportant une surface périphérique extérieure formée d'un matériau tendre afin de ne pas rayer ou endommager la porte arrière 31 du véhicule automobile 3.

Le bras poly-articulé 1 comporte plusieurs segments 11 qui sont reliés entre eux via des liaisons motorisées permettant de contrôler l'orientation et le mouvement de l'extrémité du bras poly-articulé 1.

Le manchon cylindrique 21 est fixé solidairement à une embase 22 qui comporte les moyens de fixation 23 au bras poly-articulé 1 du robot. L'embase 22 a une conformation générale cylindrique. Un diamètre de l'embase 22 est supérieur à celui du manchon cylindrique 21 de l'outil 2.

L'outil 2 a une forme élancée suivant un axe d'élongation O1 propre qui s'étend perpendiculairement à l'embase 22.

Dans l'exemple de réalisation illustré sur les FIGURES 2 à 4, l'outil 2 comporte un arbre intérieur 20 qui est fixé solidairement à l'embase 22. L'arbre intérieur 20 est formé d'un matériau métallique rigide afin d'apporter la robustesse attendue par l'outil 2. Par exemple, le matériau formant l'arbre intérieur 20 comporte de l'acier ou un alliage d'acier.

L'arbre intérieur 20 est par exemple vissé dans l'embrase et maintenu comme tel via un écrou de serrage 24.

L'arbre intérieur 20 est ensuite coiffé du manchon cylindrique 21. A cet effet, le manchon cylindrique 21 est emmanché autour de l'arbre intérieur 20 et lié à lui par un flasque d'extrémité 27 et une vis de fixation 26 à l'arbre intérieur 20, au niveau d'une extrémité libre 25 de l'outil 2. Cette configuration avantageuse autorise ainsi une interchangeabilité facile du manchon cylindrique 21 en cas d'usure ou de casse.

L'objectif de l'invention est de manipuler l'ouverture et la fermeture de la porte arrière 31 du véhicule automobile 3 sans laisser de traces sur la porte arrière 31 et sans l'endommager, c'est-à-dire par exemple sans la rayer. A cet effet, le manchon cylindrique 21 est formé d'un matériau tendre, en comparaison avec le matériau métallique formant l'arbre intérieur 20 par exemple. Le matériau tendre formant le manchon cylindrique 21 extérieur permet de réaliser un toucher doux voire amorti avec le porte arrière 31 du véhicule automobile 3 et lorsque le robot positionne le bras poly-articulé 1 et l'outil 2 contre la porte arrière 31. En particulier, le matériau tendre formant le manchon cylindrique 21 présente un module de Young de l'ordre de quelques Gigapascal ou moins.

Selon un mode de réalisation préféré de l'invention, le matériau tendre formant le manchon cylindrique 21 est du type d'un polymère technique, tel que par exemple un polyuréthane.

Pour ne pas abîmer la porte arrière 31 du véhicule automobile 3, le manchon cylindrique 21 est monté libre en rotation par rapport à l'extrémité du bras poly-articulé 1 du robot. Plus particulièrement, le manchon cylindrique 21 peut être monté libre en rotation par rapport à l'arbre intérieur 20 de l'outil 2, ou l'outil 2 lui-même peut être monté libre en rotation par rapport à l'extrémité du bras poly-articulé 1. Bien entendu, on considère ici la rotation de l'outil 2 suivant l'axe d'élongation O1 propre de l'outil 2.

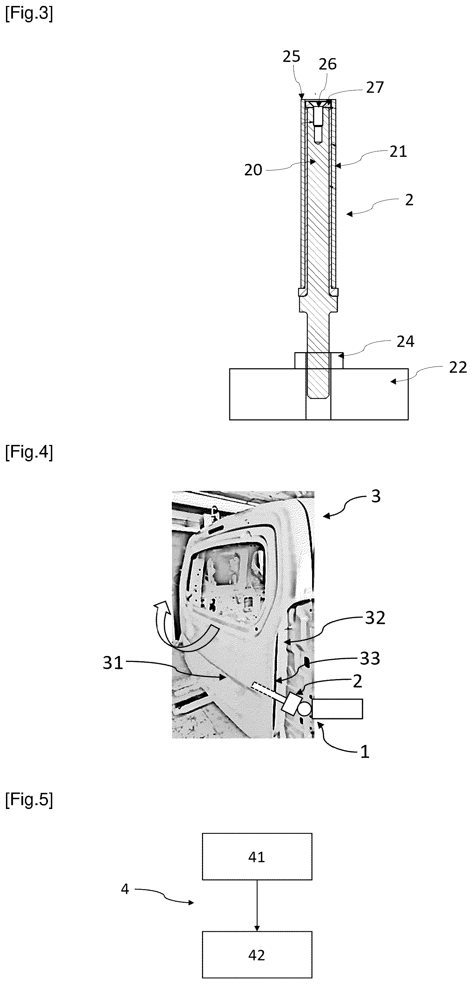

En référence aux FIGURES 4 et 5, l'outil 2 est inséré entre la porte arrière 31 et un panneau arrière 32 du véhicule automobile 3 afin de manipuler ladite porte arrière 31 et pour pouvoir l'ouvrir. A cet effet, l'outil 2 est inséré au niveau d'un intervalle 33 existant entre la porte arrière 31 et le panneau arrière 32 du véhicule automobile 3. C'est pour cette raison d'ailleurs que l'outil 2 présente une forme allongée ; et le manchon cylindrique 21 présente des dimensions inférieures à celles de l'intervalle 33 pour pouvoir autoriser facilement cette insertion.

Plus particulièrement, le manchon cylindrique 21 est inséré suivant l'axe transversal du véhicule automobile 3, dans l'intervalle 33 libre existant entre le panneau arrière 32 et la porte arrière 31, et au niveau d'une partie inférieure de la porte arrière 31, relativement à l'axe vertical.

Une fois l'outil 2 inséré dans l'intervalle 33, il est possible d'exercer un effort contre la porte arrière 31 pour pouvoir l'ouvrir. Le matériau tendre utilisé pour le manchon cylindrique 21 garantit de ne pas endommager la porte arrière 31 ou le panneau arrière 32 lors de l'insertion de l'outil 2 dans l'intervalle 33 et lors de l'application de l'effort contre la porte arrière 31.

Ainsi, en référence à la FIGURE 5 plus particulièrement, l'invention adresse aussi un procédé de manipulation 4 de la porte arrière 31 du véhicule automobile 3 à l'aide d'un robot comportant un outil 2 au bout d'un bras poly-articulé 1, tel que décrit précédemment. Le procédé de manipulation 4 comporte une étape de mise en appui 41 du manchon cylindrique 21 contre la porte arrière 31 et une étape d'application 42 d'un effort contre la porte arrière 31 par l'outil 2.

Selon une première variante de réalisation, le procédé de manipulation 4 est du type d'un procédé d'ouverture de la porte arrière 31 du véhicule automobile 3 ; et l'étape de mise en appui 41 du procédé de manipulation 4 selon l'invention consiste en une étape d'insertion de l'outil 2 dans l'intervalle 33 existant entre la porte arrière 31 et le panneau arrière 32 du véhicule automobile 3. Par suite, l'étape d'application 42 de l'effort est une étape d'ouverture de la porte arrière 31 de sorte à exercer un couple sur la porte arrière 31 conduisant à sa rotation et son ouverture.

Selon une deuxième variante de réalisation, le procédé de manipulation 4 est du type d'un procédé de fermeture de la porte arrière 31 du véhicule automobile 3 ; et l'étape de mise en appui 41 du procédé de manipulation 4 selon l'invention consiste en une mise en appui du manchon cylindrique 21 contre la porte arrière 31 - au niveau d'une face extérieure de la porte arrière 31. Par suite, l'étape d'application 42 de l'effort est une étape de fermeture de la porte arrière 31 de sorte à exercer un couple sur la porte arrière 31 conduisant à sa rotation et sa fermeture.

En synthèse, l'invention concerne un outil 2 destiné à équiper une extrémité d'un bras poly-articulé 1 d'un robot configuré pour intervenir sur un véhicule automobile 3 comportant une porte arrière 31 montée rotative et contrôlant l'accès à un coffre arrière, l'outil 2 comportant un manchon cylindrique 21 configuré pour pouvoir être inséré dans un intervalle 33 existant entre une porte arrière 31 et un panneau arrière 32 du véhicule automobile 3, le manchon cylindrique 21 comportant une surface périphérique extérieure formée d'un matériau tendre afin de ne pas rayer ou endommager la porte arrière 31 du véhicule automobile 3. Le manchon cylindrique 21 comporte un arbre intérieur 20 configuré pour être fixé solidairement à l'extrémité du bras poly-articulé 1 du robot, le manchon cylindrique 21 coiffant l'arbre intérieur 20. Le manchon cylindrique 21 est monté rotatif par rapport à l'arbre intérieur 20 ou par rapport à l'extrémité du bras poly-articulé 1 du robot.

## Revendications

1. Outil (2) destiné à équiper une extrémité d'un bras poly-articulé (1) d'un robot configuré pour intervenir sur un véhicule automobile (3) comportant une porte arrière (31) montée rotative et contrôlant l'accès à un coffre arrière, l'outil (2) comportant un manchon cylindrique (21) et des moyens de liaison au bras poly-articulé (1) du robot, le manchon cylindrique (21) comportant une surface périphérique extérieure formée d'un matériau tendre afin de ne pas rayer ou endommager la porte arrière (31) du véhicule automobile (3), **caractérisé en ce que** le manchon cylindrique (21) comporte un arbre intérieur (20) configuré pour être fixé solidairement à l'extrémité du bras poly-articulé (1) du robot, le manchon cylindrique (21) coiffant l'arbre intérieur (20), et **en ce que** le manchon cylindrique (21) est monté rotatif par rapport à l'arbre intérieur (20) ou par rapport à l'extrémité du bras poly-articulé (1) du robot.

2. Outil (2) selon la revendication précédente, dans lequel le matériau tendre formant la surface périphérique est du type d'un matériau présentant un module d'élasticité inférieur à 10 GPa.

3. Outil (2) selon l'une quelconque des revendications précédentes, dans lequel le matériau tendre formant la surface périphérique est du type d'un polymère technique, tel que par exemple un polyuréthane.

4. Outil (2) selon l'une quelconque des revendications précédentes, dans lequel un diamètre extérieur du manchon cylindrique (21) est inférieur à un intervalle (33) mesuré sur le véhicule automobile (3) entre la porte arrière (31) et un panneau arrière (32) du véhicule automobile (3), mesuré suivant un axe longitudinal et au niveau d'un bord latéral de ladite porte arrière (31).

5. Robot d'intervention sur un véhicule automobile (3) comportant une porte arrière (31) montée pivotante et contrôlant l'accès à un coffre arrière du véhicule automobile (3), le robot comprenant au moins un bras poly-articulé (1) dont une extrémité libre (25) est solidaire d'un outil (2) selon l'une quelconque des revendications précédentes.

6. Procédé de manipulation (4) d'une porte arrière (31) de véhicule automobile (3) à l'aide d'un robot selon la revendication précédente, le procédé de manipulation (4) comportant une étape de mise en appui (41) du manchon cylindrique (21) contre la porte arrière (31) et une étape d'application (42) d'un effort contre la porte arrière (31) par l'outil (2).

7. Procédé de manipulation (4) selon la revendication 6, dans lequel l'étape de mise en appui (41) consiste en une étape d'insertion de l'outil (2) entre la porte arrière (31) et un panneau arrière (32) du véhicule automobile (3) et dans lequel l'étape d'application (42) de l'effort est une étape d'ouverture de la porte arrière (31) de sorte à exercer un couple sur la porte arrière (31) conduisant à sa rotation et son ouverture.

8. Procédé de manipulation (4) selon la revendication 6, dans lequel l'étape de mise en appui (41) consiste en une mise en appui du manchon cylindrique (21) contre la porte arrière (31) et dans lequel l'étape d'application (42) de l'effort est une étape de fermeture de la porte arrière (31) de sorte à exercer un couple sur la porte arrière (31) conduisant à sa rotation et sa fermeture.'

## Patentansprüche

1. Werkzeug (2) zum Ausstatten eines Endes eines Mehrlenkerarms (1) mit einem Roboter, der zum Eingriff in ein Kraftfahrzeug (3) mit einer drehbar gelagerten und den Zugang zu einem hinteren Kofferraum steuernden hinteren Tür (31) konfiguriert ist, wobei das Werkzeug (2) eine zylindrische Hülse (21) und Mittel zum Verbinden mit dem Mehrlenkerarm (1) des Roboters aufweist, wobei die zylindrische Hülse (21) eine äußere Umfangsfläche aufweist, die aus einem weichen Material gebildet ist, um die hintere Tür (31) des Kraftfahrzeugs (3) nicht zu zerkrattern oder zu beschädigen, **dadurch gekennzeichnet, dass** Die zylindrische Hülse (21) weist eine Innenwelle (20) auf, die so ausgebildet ist, dass sie fest am Ende des Mehrgelenkarms (1) des Roboters befestigt ist, wobei die zylindrische Hülse (21) die Innenwelle (20) überdeckt, und dass die zylindrische Hülse (21) bezüglich der Innenwelle (20) oder bezüglich des Endes des Mehrgelenkarms (1) des Roboters drehbar gelagert ist.

2. Werkzeug (2) nach dem vorhergehenden Anspruch, wobei das die Umfangsoberfläche bildende weiche Material von der Art eines Materials ist, das einen Elastizitätsmodul von weniger als 10 GPa aufweist.

3. Werkzeug (2) nach einem der vorhergehenden Ansprüche, bei dem das die Umfangsoberfläche bildende weiche Material von der Art eines technischen Polymers ist, wie z.B. Polyurethan.

4. Werkzeug (2) nach einem der vorhergehenden Ansprüche, wobei ein Außendurchmesser der zylindrischen Hülse (21) kleiner ist als ein Abstand (33), der am Kraftfahrzeug (3) zwischen der hinteren Tür (31) und einer hinteren Platte (32) des Kraftfahrzeugs (3) gemessen wird, gemessen entlang einer Längsachse und an einer Seitenkante der hinteren Tür (31).

5. Roboter zum Eingreifen in ein Kraftfahrzeug (3) mit einer hinteren Tür (31), die schwenkbar montiert ist und den Zugang zu einem hinteren Kofferraum des Kraftfahrzeugs (3) steuert, wobei der Roboter mindestens einen mehrgelenkigen Arm (1) umfasst, dessen freies Ende (25) mit einem Werkzeug (2) nach einem der vorhergehenden Ansprüche fest verbunden ist.

6. Verfahren zum Manipulieren (4) einer hinteren Tür (31) eines Kraftfahrzeugs (3) mithilfe eines Roboters nach dem vorhergehenden Anspruch, wobei das Manipulierungsverfahren (4) einen Schritt zum Anlegen (41) der zylindrischen Hülse (21) an die hintere Tür (31) und einen Schritt zum Anlegen (42) einer Kraft an die hintere Tür (31) durch das Werkzeug (2) umfasst.

7. Handhabungsverfahren (4) nach Anspruch 6, wobei der Schritt des Andrückens (41) einen Schritt des Einführens des Werkzeugs (2) zwischen die hintere Tür (31) und eine hintere Platte (32) des Kraftfahrzeugs (3) umfasst und wobei der Schritt des Aufbringens (42) der Kraft ein Schritt des Öffnens der hinteren Tür (31) ist, um ein Drehmoment auf die hintere Tür (31) auszuüben, das zu ihrer Drehung und Öffnung führt.

8. Handhabungsverfahren (4) nach Anspruch 6, wobei der Schritt des Andrückens (41) ein Andrücken der zylindrischen Hülse (21) an die hintere Tür (31) umfasst und wobei der Schritt des Aufbringens (42) der Kraft ein Schritt des Schließens der hinteren Tür (31) ist, um ein Drehmoment auf die hintere Tür (31) auszuüben, das zu ihrer Drehung und ihrem Schließen führt.

## Claims

1. Tool (2) for fitting one end of a multi-articulated arm (1) of a robot configured to operate on a motor vehicle (3) comprising a rear gate (31) mounted to rotate and controlling access to a rear boot, the tool (2) comprising a cylindrical sleeve (21) and means for connecting to the multi-articulated arm (1) of the robot, the cylindrical sleeve (21) comprising an outer peripheral surface made of a soft material so as not to scratch or damage the rear gate (31) of the motor vehicle (3), wherein the cylindrical sleeve (21) comprises an inner shaft (20) configured to be fixed securely to the end of the multi-articulated arm (1) of the robot, the cylindrical sleeve (21) covering the inner shaft (20), and the cylindrical sleeve (21) is rotatably mounted by report to the inner shaft (20) or by report to the end of the multi-articulated arm (1) of the robot.

2. The Tool (2) according to claim 1, wherein the soft material forming the peripheral surface is of the type of a material having a modulus of elasticity of less than 10 GPa.

3. Tool (2) according to any one of the previous claims, in which the soft material forming the peripheral surface is of the type of a technical polymer, such as, for example, a polyurethane.

4. Tool (2) according to any one of the previous claims, in which an outer diameter of the cylindrical sleeve (21) is less than an interval (33) measured on the motor gate (3) between the rear (31) and a rear panel (32) of the motor vehicle (3), measured along a longitudinal axis and at the level of a lateral edge of said rear gate (31).

5. Robot for intervention on a motor vehicle (3) comprising a rear gate (31) mounted pivotably and controlling access to a rear trunk of the motor vehicle (3), the robot comprising at least one multi-articulated arm (1), one free end (25) of which is integral with a tool (2) according to any one of the previous claims.

6. Method of handling (4) a rear gate (31) of a motor vehicle (3) using a robot according to previous claim, the method of handling (4) comprising a step of pressing (41) the cylindrical sleeve (21) against the rear gate (31) and a step of applying (42) a force against the rear gate (31) by the tool (2).

7. The handling method (4) according to claim 6, wherein the pressing step (41) consists of a step of inserting the tool (2) between the rear gate (31) and a rear panel (32) of the motor vehicle (3) and wherein the step of applying (42) the force is a step of opening the rear gate (31) so as to exert a torque on the rear gate (31) leading to its rotation and opening.

8. Handling method (4) according to Claim 6, wherein the bearing step (41) consists in bearing the cylindrical sleeve (21) against the rear gate (31) and wherein the step (42) of applying the force is a step of closing the rear gate (31) so as to exert a torque on the rear gate (31) leading to its rotation and closure.
